# EUROPEAN PATENT APPLICATION

(11) **EP 3 185 342 A1**
(43) Date of publication of application: **28.06.2017**
(21) Application number: 16206628.6
(22) Date of filing: 23.12.2016
(51) Int. Cl.: H01M 4/92, H01M 8/1018

(54) **ELECTRODE CATALYST FOR FUEL CELLS**

(30) Priority: 24.12.2015 JP 2015252162
(71) Applicant: Toyota Jidosha Kabushiki Kaisha, Toyota-shi, Aichi-ken, 471-8571 (JP); CATALER CORPORATION, Kakegawa-shi, Shizuoka, 437-1492 (JP)
(72) Inventor: MIZUTANI, Nobuaki, Toyota-shi, Aichi 471-8571 (JP); ISHIBASHI, Kazunobu, Toyota-shi, Aichi 471-8571 (JP); YAMAMOTO, Kenji, Kakegawa-shi, Shizuoka 437-1492 (JP); KATAOKA, Mikihiro, Kakegawa-shi, Shizuoka 437-1492 (JP); HORI, Akihiro, Kakegawa-shi, Shizuoka 437-1492 (JP); MAKINO, Yuki, Kakegawa-shi, Shizuoka 437-1492 (JP)
(74) Representative: D Young & Co LLP

(57) **Abstract**

A means of inhibiting the occurrence of overvoltage in an electrode catalyst for fuel cells so as to substantially prevent reduction of fuel cell performance includes an anode electrode catalyst for fuel cells, which contains a carbon support having at least one pore having a pore size of 10 nm or less and a pore volume of 1.1 to 8.4 cm³/g and catalyst particles having particle sizes of 3.1 nm or less and supported by the carbon support so that the density of supported catalyst particles is 15% to 40% by mass.

## Description

### CROSS-REFERENCE TO RELATED APPLICATIONS

This application claims priority from Japanese patent application JP 2015-252162 filed on December 24, 2015, the content of which is hereby incorporated by reference into this application.

### BACKGROUND

### Field

Exemplary embodiments relate to an electrode catalyst for fuel cells and especially an electrode catalyst for fuel cells that is particularly appropriate for use for an anode.

### Description of Related Art

Fuel cells generate electricity through an electrochemical reaction between hydrogen and oxygen. In principle, water is the only product generated as a result of fuel cell power generation. For such reason, fuel cells have been gaining attention as clean power generation systems that cause substantially no geoenvironmental burdens.

In a fuel cell, a fuel gas containing hydrogen is supplied to an anode (fuel electrode) and an oxidation gas containing oxygen is supplied to a cathode (air electrode), thereby generating electromotive force. Here, the oxidation reaction expressed by formula (1) below proceeds on the anode side while the reduction reaction expressed by formula (2) below proceeds on the cathode side. The entire reaction expressed by formula (3) below proceeds to supply electromotive force to an external circuit.

H₂→2H⁺+2e⁻ (1)

(1/2)O₂+2H⁺+2e⁻→₂O (2)

H₂+ (1/2)O₂→H₂O (3)

Fuel cells are classified as follows based on electrolyte type: polymer electrolyte fuel cells (PEFCs), phosphoric acid fuel cells (PAFCs), molten carbonate fuel cells (MCFCs), and solid oxide fuel cells (SOFCs), for example. Among these, it is common for PEFCs and PAFCs to use an electrode catalyst having a conductive support such as a carbon support, and particles of a catalyst metal having catalyst activity, such as platinum or a platinum alloy supported by the conductive support, hereinafter sometimes referred to as "catalyst particles".

A carbon support used for an electrode catalyst usually has a large specific surface area, so that the density of supported catalyst particles can be increased. One example of a carbon support having a large specific surface area is a carbon support having multiple void parts like pores.

For example, JP Patent Publication (Kokai) No. 2012-129059 A discloses a supported catalyst for fuel cells comprising a carbon support in which the volume of pores having diameters of 10 nm or less is 0.03 to 0.15 cm³/g and catalyst particles supported by the above carbon support, wherein the quantity of acidic functional groups per specific surface area is 0.4 µmol/m² or greater. The publication teaches that the average particle size of catalyst particles is preferably 3.0 to 7.0 nm.

WO2014/175101 discloses a method for producing a catalyst in which a catalyst metal is supported by a support having holes, wherein the mode radius for the distribution of such holes is from 1 nm to less than 5 nm and the hole volume of the holes is 0.3 cc/g (cc per gram of the support) or greater. The method comprises a step of impregnating the holes inside the support with components of the catalyst metal and a step of carrying out heat treatment after the impregnation step.

JP Patent Publication (Kokai) No. 2015-71784 A discloses a method for increasing the surface area of carbon black. The method comprises bringing starting material of carbon black having a first BET nitrogen specific surface area into contact with an oxidant in a fluid bed under conditions effective for producing a carbon black product having a second BET nitrogen specific surface area greater than the first BET nitrogen specific surface area.

### SUMMARY

A carbon support having a large specific surface area is effective for obtaining an electrode catalyst for fuel cells in which catalyst particles are supported at high density. However, conventional electrode catalysts for fuel cells still need to be improved in terms of performance.

For example, in the case of the supported catalyst for fuel cells disclosed in JP Patent Publication (Kokai) No. 2012-129059 A, the average particle size of catalyst particles is preferably 3.0 to 7.0 nm. However, an electrode catalyst containing catalyst particles having such average particle size has a small specific surface area of catalyst particles. Therefore, if the electrode catalyst is applied to an anode for fuel cells, it might cause an increase in H₂ diffusion resistance. In such a case, an overvoltage occurs in the anode, which might cause reduction of fuel cell performance.

In addition, in the case of an electrode catalyst having pores with a large specific surface area, catalyst particles having fine particle sizes that allow for a large specific surface area might be supported inside pores. If such electrode catalyst is applied to an anode for fuel cells, the H₂ diffusion pathway is extended, which might cause an increase in H₂ diffusion resistance. In such a case, an overvoltage occurs in the anode, which might cause reduction of fuel cell performance.

Therefore, exemplary embodiments relate to providing a means of inhibiting the occurrence of overvoltage in an electrode catalyst for fuel cells so as to substantially prevent reduction of fuel cell performance, particularly when the electrode catalyst is applied to an anode.

For example, an electrode catalyst for fuel cells is obtained by allowing a carbon support having pores having pore sizes within a specific range at a pore volume within a specific range to support catalyst particles having particle sizes within a specific range; and when the electrode catalyst for fuel cells is applied to an anode, it results in reduction of H₂ diffusion resistance and anode overvoltage, thereby making it possible to substantially prevent reduction of fuel cell performance. Based on the findings, exemplary embodiments are shown below.

For example, exemplary embodiments are as follows.
(1) An anode electrode catalyst for fuel cells, which contains a carbon support having at least one pore having a pore size of 10 nm or less and a pore volume of 1.1 to 8.4 cm³/g and catalyst particles having particle sizes of 3.1 nm or less and supported by the carbon support so that the density of supported catalyst particles is 15% to 40% by mass.
(2) The anode electrode catalyst for fuel cells according to (1), wherein the catalyst particles contain platinum.
(3) The anode electrode catalyst for fuel cells according to (1) or (2), wherein the at least one pore has a pore volume of 2.2 to 8.4 cm³/g.
(4) The anode electrode catalyst for fuel cells according to any one of (1) to (3), wherein the catalyst particles have particle sizes of 1.5 to 3.1 nm.
(5) The anode electrode catalyst for fuel cells according to any one of (1) to (4), wherein the density of supported catalyst particles is 15% to 30% by mass.
(6) A fuel cell, which comprises the anode electrode catalyst for fuel cells according to any one of (1) to (5).

According to the exemplary embodiments, it becomes possible to inhibit the occurrence of overvoltage in an electrode catalyst for fuel cells so as to substantially prevent reduction of fuel cell performance, particularly when the electrode catalyst is applied to an anode.

### BRIEF DESCRIPTION OF THE DRAWINGS

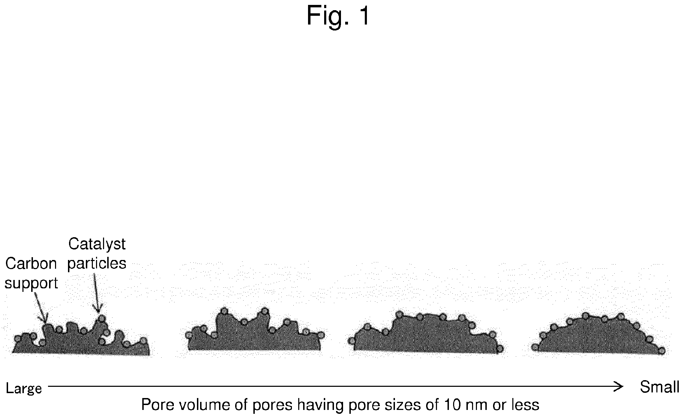

Fig 1 schematically shows surface profiles of the electrode catalysts for fuel cells of the Comparative Examples and the Examples;

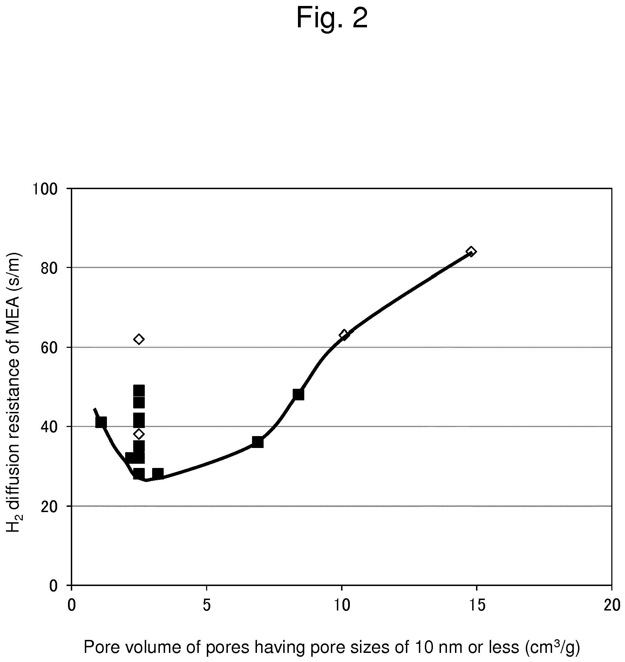

Fig. 2 is a chart showing the relationship between the pore volume of pores having pore sizes of 10 nm or less on the carbon support for the electrode catalysts of the Examples and the Comparative Examples and H₂ diffusion resistance in MEAs having anodes for which the electrode catalysts were used. White diamonds: the values for Comparative Examples 1 to 5; black squares: the values for Examples 1 to 12; and

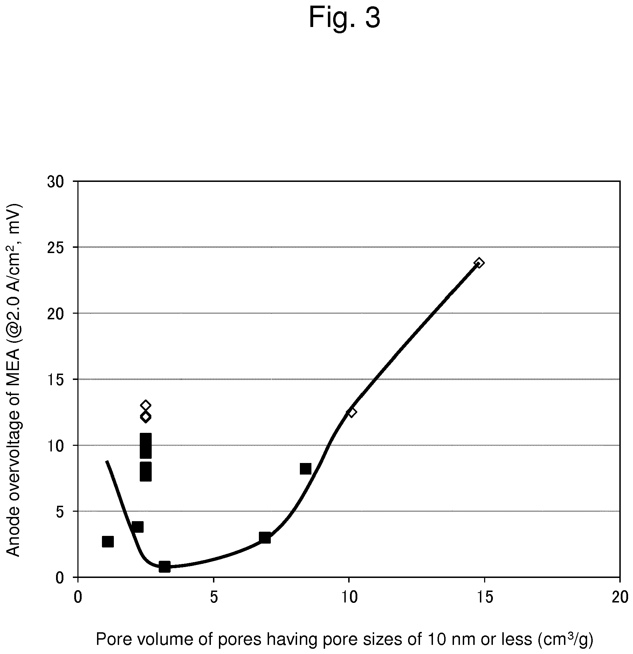

Fig. 3 is a chart showing the relationship between the pore volume of pores having pore sizes of 10 nm or less on the carbon support for the electrode catalysts of the Examples and the Comparative Examples and anode overvoltage in MEAs having anodes for which the electrode catalysts were used. White diamonds: the values for Comparative Examples 1 to 5; black squares: the values for Examples 1 to 12.

### DETAILED DESCRIPTION OF THE EMBODIMENTS

Preferred embodiments are described in detail below.

### <1. Electrode catalyst for fuel cells>

Exemplary embodiments relate to an electrode catalyst for fuel cells. The electrode catalyst for fuel cells described herein contains a carbon support and a catalyst metal supported by the carbon support.

Conventional carbon supports used for electrode catalysts for fuel cells have large specific surface areas in order to support catalyst particles with high dispersivity and high density, which is intended to improve activity. One example of a carbon support having a large specific surface area is a carbon support having multiple pores. When an electrode catalyst contains a carbon support having multiple pores and a large specific surface area, catalyst particles having fine particle sizes that result in a large specific surface area would be supported inside the pores. If such electrode catalyst is applied to an anode of a fuel cell, the H₂ diffusion pathway is extended, which might cause an increase in H₂ diffusion resistance. In such a case, an overvoltage occurs in the anode, which might cause reduction of fuel cell performance.

In addition, it is known that when an electrode catalyst for fuel cells contains catalyst particles having an excessively small average particle size, the durability of the catalyst particles tends to decline. In view of such problems, catalyst particles having an average particle size of a certain level or higher have been used for conventional electrode catalysts for fuel cells. For example, in the case of the supported catalyst for fuel cells disclosed in JP Patent Publication (Kokai) No. 2012-129059 A, catalyst particles preferably have an average particle size of 3.0 to 7.0 nm. However, it has been revealed that if an electrode catalyst for fuel cells containing catalyst particles having such average particle size is applied to an anode of a fuel cell, the electrochemical surface area (ECSA) of the catalyst particles in the fuel cell decreases, which might cause H₂ diffusion resistance to increase. It has been further revealed that if H₂ diffusion resistance increases in the fuel cell, an overvoltage occurs in the anode, which might cause reduction of fuel cell performance.

For example, an electrode catalyst for fuel cells is obtained by allowing a carbon support having pores having pore sizes within a specific range at a pore volume within a specific range to support catalyst particles having particle sizes within a specific range; and when the electrode catalyst for fuel cells is applied to an anode of a fuel cell, it results in reduction of H₂ diffusion resistance and anode overvoltage. Thus, it is possible to substantially prevent reduction of fuel cell performance with the use of the anode electrode catalyst for fuel cells according to the exemplary embodiments having such features.

The anode electrode catalyst for fuel cells described herein can be evaluated in terms of H₂ diffusion resistance and anode overvoltage. For example, a membrane electrode assembly (MEA) of a fuel cell in which the anode electrode catalyst for fuel cells is used for an anode is produced so as to conduct a test for evaluating H₂ diffusion resistance and anode overvoltage, which is usually performed in the art, with the use of the MEA.

The carbon support contained in the anode electrode catalyst for fuel cells according to the exemplary embodiments has at least one pore having a pore size of 10 nm or less and a pore volume of 1.1 to 8.4 cm³/g. According to the exemplary embodiments, the expression "pore size" when used in reference to the pore(s) in the carbon support means an average pore size of such pore(s). Also, according to the exemplary embodiments, the expression "pore volume" when used in reference to the pore(s) in the carbon support means a sum of the pore volume(s) of such pore(s). The pore size is preferably 1 to 10 nm and more preferably 1 to 3 nm. The pore volume is preferably 2.2 to 8.4 cm³/g, more preferably 2.2 to 6.9 cm³/g, and further preferably 2.2 to 3.2 cm³/g. As described below, catalyst particles contained in the anode electrode catalyst for fuel cells described herein have particle sizes of 3.1 nm or less. Here, if the pore volume of at least one pore in the carbon support of the anode electrode catalyst for fuel cells of the exemplary embodiments exceed the above limit, catalyst particles are highly likely to be supported inside the pore. If such anode electrode catalyst for fuel cells is used for an anode of a fuel cell, the H₂ diffusion pathway is extended, and thus H₂ diffusion resistance increases, which might result in increased anode overvoltage. Therefore, when the pore volume of the pore(s) in the carbon support is within the above range, it is possible to prevent an increase in H₂ diffusion resistance so as to inhibit anode overvoltage by applying the anode electrode catalyst for fuel cells according to the exemplary embodiments to an anode of a fuel cell, thereby substantially preventing reduction of fuel cell performance.

The pore size and pore volume of the pore(s) in the carbon support can be determined based on, for example, a pore distribution curve that can be obtained by the Barrett-Joyner-Halenda (BJH) method or the like. The pore size distribution curve can be obtained in accordance with the following procedures or the like. The amount of nitrogen gas (ml/g) adsorbed to a carbon support is determined at pressure P (mmHg) of nitrogen gas while pressure P is gradually increased in a nitrogen gas atmosphere at 77.4 K (nitrogen boiling point). Next, assuming that relative pressure P/P₀ is a value obtained by dividing pressure P (mmHg) by saturated vapor pressure P₀ (mmHg) of nitrogen gas, the amount of adsorbed nitrogen gas at relative pressure P/P₀ is plotted, thereby obtaining an adsorption isotherm. Then, the pore distribution of the carbon support is obtained based on the adsorption isotherm according to the BJH method. Thus, the pore distribution curve can be obtained. A known document such as J. Am. Chem. Soc., 1951, vol. 73, pp. 373-380 can be referred to for the BJH method.

A carbon support having the pore size and pore volume described above usually has a solid structure having a very small number of pores. According to the exemplary embodiments, the expressions "carbon support having a solid structure" and "solid carbon support" both mean a carbon support having a small number of void parts like pores. By allowing the anode electrode catalyst for fuel cells according to the exemplary embodiments to have a carbon support with a solid structure, it is possible to increase the proportion of catalyst particles that are not supported inside the pore(s) in the carbon support. Accordingly, when the anode electrode catalyst for fuel cells according to the exemplary embodiments are applied to an anode of a fuel cell, it is possible to prevent an increase in H₂ diffusion resistance so as to inhibit anode overvoltage, thereby substantially preventing reduction of fuel cell performance.

It is possible to determine whether a carbon support has a solid structure in the following manner. For example, transmission electron microscope (TEM) images of the anode electrode catalyst for fuel cells of described herein are continuously obtained from different angles. Based on the obtained TEM images, the proportion of catalyst particles supported on the periphery of the carbon support relative to the sum of catalyst particles supported on the periphery of the carbon support and catalyst particles supported inside the carbon support is calculated. According to the above method, it is possible to determine that the carbon support has a solid structure if, for example, the calculated proportion is 0.85 or higher.

Catalyst particles contained in the anode electrode catalyst for fuel cells according to the exemplary embodiments have particle sizes of 3.1 nm or less. According to the exemplary embodiments, the expression "particle size" used with reference to catalyst particles means an average particle size of such catalyst particles. The particle size of catalyst particles is preferably 1.5 to 3.1 nm and more preferably 1.5 to 2.5 nm. If catalyst particles have particle sizes exceeding the above upper limit, the ECSA of the catalyst particles decreases in a fuel cell comprising an anode electrode catalyst for fuel cells containing such catalyst particles, and thus H₂ diffusion resistance increases, which might result in increased anode overvoltage. Therefore, if catalyst particles have particle sizes that do not exceed the upper limit, it is possible to apply the anode electrode catalyst for fuel cells according to the exemplary embodiments to an anode of a fuel cell so as to prevent an increase in H₂ diffusion resistance and inhibit anode overvoltage, thereby substantially preventing reduction of fuel cell performance. In addition, if catalyst particles have particle sizes that are not below the above lower limit, it is possible to obtain an anode electrode catalyst for fuel cells containing catalyst particles having high durability.

In general, the particle size of catalyst particles contained in an electrode catalyst for fuel cells increases as the temperature for calcining supported catalyst particles is increased during production of an electrode catalyst for fuel cells. Specific conditions for obtaining catalyst particles having particle sizes within the above range can be determined using the correlationship between the particle size of catalyst particles and conditions for calcination treatment, which is obtained by conducting a preliminary experiment in advance in consideration of the above factors. It is possible to obtain catalyst particles having particle sizes within the above range in such manner.

The particle size of catalyst particles can be determined by, for example, the following method. X-ray diffraction (XRD) of catalyst particles contained in the anode electrode catalyst for fuel cells of the exemplary embodiments is determined using an XRD device. The obtained XRD is used for the fitting of a normal distribution curve to a peak pattern corresponding to a (220) plane of a catalyst metal crystal contained in catalyst particles. After such fitting, the half-value width of the normal distribution curve is calculated. The particle size of catalyst particles containing a catalyst metal is calculated by a known method e.g., JIS H7805 based on the obtained half-value width. The particle size of catalyst particles obtained by the above method corresponds to the crystallite diameter on a (220) plane for the catalyst particles. There is a certain correlationship between the crystallite diameter of a (220) plane and a crystallite diameter of a different lattice plane such as a (111) plane for catalyst particles. Therefore, the particle size of catalyst particles may also be calculated based on a crystallite diameter of a different lattice plane such as a (111) plane.

Catalyst particles contained in the anode electrode catalyst for fuel cells according to the exemplary embodiments is supported at a density of 15% to 40% by mass. According to the exemplary embodiments, the expression "density of supported catalyst particles" means a percentage of the mass of catalyst particles to the total mass of an electrode catalyst. The density of supported catalyst particles is preferably 15% to 30% by mass and more preferably 15% to 20% by mass. When the density of supported catalyst particles is within the above range, it is possible to apply the anode electrode catalyst for fuel cells described herein to a fuel cell anode so as to prevent an increase in H₂ diffusion resistance and inhibit anode overvoltage, thereby substantially preventing reduction of fuel cell performance.

Catalyst particles contained in the anode electrode catalyst for fuel cells described herein contain, as a catalyst metal, preferably either platinum (Pt) or a platinum alloy and more preferably Pt. The platinum alloy usually consists of Pt and at least one further metal. In such cases, examples of the at least one further metal that constitutes a platinum alloy include cobalt (Co), gold (Au), palladium (Pd), nickel (Ni), manganese (Mn), iridium (Ir), iron (Fe), copper (Cu), titanium (Ti), tantalum (Ta), niobium (Nb), yttrium (Y), and lanthanoid elements such as gadolinium (Gd), lanthanum (La), and cerium (Ce). The at least one further metal is preferably Co, Au, Pd, Ni, Mn, Cu, Ti, Ta, or Nb and more preferably Co. Preferably, the catalyst metal is Pt or Pt₃Co. When catalyst particles contained in the anode electrode catalyst for fuel cells of the exemplary embodiments contain the above catalyst metal, an electrode catalyst having high activity and high durability can be obtained.

The composition and amount of catalyst particles supported in the anode electrode catalyst for fuel cells according to the exemplary embodiments can be determined by, for example, dissolving a catalyst metal contained in catalyst particles of an electrode catalyst using aqua regia, followed by quantitative determination of catalyst metal ions in the solution using an inductively coupled plasma (ICP) emission spectrometer.

The anode electrode catalyst for fuel cells of the exemplary embodiments can be applied to a fuel cell anode. Therefore, the exemplary embodiments also relate to a fuel cell comprising the anode electrode catalyst for fuel cells according to the exemplary embodiments. The fuel cell of the exemplary embodiments comprise, as an anode, the anode electrode catalyst for fuel cells described herein, and it further comprises a cathode and an ionomer. A cathode and an ionomer used for the fuel cell according to the exemplary embodiments can be appropriately selected from materials that are generally used in the art. It is possible to apply the anode electrode catalyst for fuel cells according to the exemplary embodiments to a fuel cell anode so as to prevent an increase in H₂ diffusion resistance and inhibit anode overvoltage, thereby substantially preventing reduction of fuel cell performance. Therefore, it is possible to apply the fuel cell described herein to an automobile or the like so as to substantially prevent performance reduction even over long-term use, thereby stably achieving high performance.

### <2: Method for producing an electrode catalyst for fuel cells>

The anode electrode catalyst for fuel cells according to the exemplary embodiments can be produced by, for example, a method comprising: a carbon support preparation step of preparing a carbon support having at least one pore having a pore size of 10 nm or less and a pore volume of 1.1 to 8.4 cm³/g; a catalyst metal salt supporting step of allowing the carbon support prepared in the carbon support preparation step to react with a catalyst metal material containing a catalyst metal salt so as to allow the carbon support to support the catalyst metal material; and a catalyst particle formation step of forming catalyst particles by heat-treating the carbon support supporting the catalyst metal material obtained in the catalyst metal salt supporting step.

### [2-1: Carbon support preparation step]

Materials for a carbon support used in the carbon support preparation step are not particularly limited as long as they are generally used in the art. A preferable material for a carbon support is acetylene black. A carbon support having the above features can be obtained using a variety of carbon support materials.

When a material for a carbon support used in this step has at least one pore having a pore size of 10 nm or less and a pore volume of 1.1 to 8.4 cm³/g, the material is directly used in the steps described below. Alternatively, if a material for a carbon support used in this step does not have the above features, it is preferable to heat-treat the material. In this case, heat treatment conditions can be appropriately determined based on the initial pore size and pore volume of the material to be used for the carbon support. For example, the heat treatment temperature is preferably 200°C to 2500°C and more preferably 400°C to 2000°C. A carbon support having the above features can be obtained by treating a material for a carbon support under the above conditions.

### [2-2: Catalyst metal salt supporting step]

A catalyst metal salt contained in a catalyst metal material used in the catalyst metal salt supporting step is preferably hexahydroxo platinum nitrate, diammine dinitro platinum (II) nitrate, or a hexahydroxo platinammine complex, if the catalyst metal is platinum. If the catalyst metal is a platinum alloy, a further metal salt that constitutes a platinum alloy contained in a catalyst metal material used in this step is preferably a salt comprising the further metal and nitric acid or acetic acid, and more preferably cobalt nitrate, nickel nitrate, manganese nitrate, cobalt acetate, nickel acetate, or manganese acetate.

This step can be carried out via a reaction involving the colloid method, the precipitation/sedimentation method, or a similar method, all of which are generally used in the art.

### [2-3: Catalyst particle formation step]

The catalyst particle formation step is employed to heat-treat a carbon support supporting a catalyst metal material so as to reduce the catalyst metal salt, thereby forming catalyst particles supported by the carbon support. The heat treatment temperature is preferably 40°C to 90°C. The heat treatment time is preferably 1 hour to 5 hours. It is preferable to carry out the above heat treatment under the presence of a reducing agent such as ethanol, hydrazine, methanol, propanol, sodium borohydride, or isopropyl alcohol. It is possible to form catalyst particles containing a catalyst metal by heat-treating a carbon support supporting a catalyst metal material under the above conditions so as to reduce a catalyst metal salt.

This step may further include a calcination step of calcining an electrode catalyst containing catalyst particles formed by heat treatment according to need. In the calcination step, the temperature for calcining the electrode catalyst containing catalyst particles is preferably 80°C to 900°C. The calcination treatment time is preferably 1 hour to 5 hours. It is possible to bring the particle size of catalyst particles within the aforementioned range by carrying out the calcination step.

### EXAMPLES

Exemplary embodiments are more specifically described below with reference to the Examples. However, the scope of the exemplary embodiments is not limited to the Examples.

### <I: Preparation of electrode catalysts>

### [1-1: Comparative Example 1]

Carbon having at least one pore having a pore size of 10 nm or less and a pore volume of 10.1 cm³/g (5.0 g) was added to 1.2 L of water in a manner such that it was dispersed therein. A hexahydroxo platinum nitrate solution containing 1.3 g of platinum was added dropwise to this dispersion liquid and sufficiently mixed with carbon. Next, approximately 100 mL of 0.1 N ammonia water was added to the dispersion liquid to adjust the pH to approximately 10 so that a hydroxide was formed and deposited on the carbon. The deposit was reduced using ethanol at 50°C. After the reaction, the dispersion liquid was filtered. The obtained powder was vacuum-dried at 100°C for 10 hours. The dried powder was subjected to calcination treatment at 500°C for 1 hour so that the particle size of platinum became 2.0 nm in an inert atmosphere. Thus, an electrode catalyst powder was obtained.

### [1-2: Comparative Example 2]

An electrode catalyst powder was obtained in the manner of Comparative Example 1, except that the carbon used was replaced by carbon having at least one pore having a pore size of 10 nm or less and a pore volume of 14.8 cm³/g.

### [1-3: Comparative Example 3]

An electrode catalyst powder was obtained in the manner of Comparative Example 1, except that the carbon used in Comparative Example 1 was replaced by carbon having at least one pore having a pore size of 10 nm or less and a pore volume of 2.5 cm³/g, the conditions for calcination treatment were changed to 800°C for 5 hours, and the particle size of platinum after calcination treatment was changed to 4.2 nm.

### [1-4: Comparative Example 4]

An electrode catalyst powder was obtained in the manner of Comparative Example 1, except that the carbon used in Comparative Example 1 was replaced by carbon having at least one pore having a pore size of 10 nm or less and a pore volume of 2.5 cm³/g, and the hexahydroxo platinum nitrate solution used was changed to a hexahydroxo platinum nitrate solution containing 0.6 g of platinum.

### [1-5: Comparative Example 5]

An electrode catalyst powder was obtained in the manner of Comparative Example 1, except that the carbon used in Comparative Example 1 was replaced by carbon having at least one pore having a pore size of 10 nm or less and a pore volume of 2.5 cm³/g, the hexahydroxo platinum nitrate solution used was changed to a hexahydroxo platinum nitrate solution containing 5.0 g of platinum, and calcination treatment of the dried powder was omitted.

### [1-6: Example 1]

Carbon having at least one pore having a pore size of 10 nm or less and a pore volume of 8.4 cm³/g (5.0 g) was added to 1.2 L of water in a manner such that it was dispersed therein. A hexahydroxo platinum nitrate solution containing 1.3 g of platinum was added dropwise to this dispersion liquid and sufficiently mixed with carbon. Next, approximately 100 mL of 0.1 N ammonia water was added to the dispersion liquid to adjust the pH to approximately 10 so that a hydroxide was formed and deposited on the carbon. The deposit was reduced using ethanol at 90°C. After the reaction, the dispersion liquid was filtered. The obtained powder was vacuum-dried at 100°C for 10 hours. The dried powder was subjected to calcination treatment at 300°C for 1 hour so that the particle size of platinum became 2.0 nm in an inert atmosphere. Thus, an electrode catalyst powder was obtained.

### [1-7: Example 2]

An electrode catalyst powder was obtained in the manner of Example 1, except that the carbon used in Example 1 was replaced by carbon having at least one pore having a pore size of 10 nm or less and a pore volume of 6.9 cm³/g.

### [1-8: Example 3]

An electrode catalyst powder was obtained in the manner of Example 1, except that the carbon used in Example 1 was replaced by carbon having at least one pore having a pore size of 10 nm or less and a pore volume of 2.5 cm³/g, and calcination treatment of the dried powder was omitted.

### [1-9: Example 4]

An electrode catalyst powder was obtained in the manner of Example 1, except that the carbon used in Example 1 was replaced by carbon having at least one pore having a pore size of 10 nm or less and a pore volume of 2.5 cm³/g.

### [1-10: Example 5]

An electrode catalyst powder was obtained in the manner of Example 1, except that the carbon used in Example 1 was replaced by carbon having at least one pore having a pore size of 10 nm or less and a pore volume of 2.5 cm³/g, the conditions for calcination treatment were changed to 500 °C for 1 hour, and the particle size of platinum after calcination treatment was changed to 2.5 nm.

### [I-11: Example 6]

An electrode catalyst powder was obtained in the manner of Example 1, except that the carbon used in Example 1 was replaced by carbon having at least one pore having a pore size of 10 nm or less and a pore volume of 2.5 cm³/g, the conditions for calcination treatment were changed to 700 °C for 1 hour, and the particle size of platinum after calcination treatment was changed to 3.1 nm.

### [1-12: Example 7]

An electrode catalyst powder was obtained in the manner of Example 1, except that the carbon used in Example 1 was replaced by carbon having at least one pore having a pore size of 10 nm or less and a pore volume of 2.5 cm³/g, and the hexahydroxo platinum nitrate solution used was changed to a hexahydroxo platinum nitrate solution containing 0.9 g of platinum.

### [1-13: Example 8]

An electrode catalyst powder was obtained in the manner of Example 1, except that the carbon used in Example 1 was replaced by carbon having at least one pore having a pore size of 10 nm or less and a pore volume of 2.5 cm³/g, and the hexahydroxo platinum nitrate solution used was changed to a hexahydroxo platinum nitrate solution containing 2.2 g of platinum.

### [1-14: Example 9]

An electrode catalyst powder was obtained in the manner of Example 1, except that the carbon used in Example 1 was replaced by carbon having at least one pore having a pore size of 10 nm or less and a pore volume of 2.5 cm³/g, the hexahydroxo platinum nitrate solution used was changed to a hexahydroxo platinum nitrate solution containing 3.4 g of platinum, and calcination treatment of the dried powder was omitted.

### [1-15: Example 10]

An electrode catalyst powder was obtained in the manner of Example 1, except that the carbon used in Example 1 was replaced by carbon having at least one pore having a pore size of 10 nm or less and a pore volume of 3.5 cm³/g

### [1-16: Example 11]

An electrode catalyst powder was obtained in the manner of Example 1, except that the carbon used in Example 1 was replaced by carbon having at least one pore having a pore size of 10 nm or less and a pore volume of 2.2 cm³/g, and calcination treatment of the dried powder was omitted.

### [1-17: Example 12]

An electrode catalyst powder was obtained in the manner of Example 1, except that the carbon used in Example 1 was replaced by carbon having at least one pore having a pore size of 10 nm or less and a pore volume of 1.1 cm³/g, and calcination treatment of the dried powder was omitted.

### <II: Method of evaluating electrode catalysts>

### [II-1: Determination of the density of supported catalyst metal]

Aqua regia was used for obtaining solutions in which Pt used as a catalyst metal was dissolved from predetermined amounts of the electrode catalysts of the Examples and the Comparative Examples. An ICP optical emission spectrometer (5100 ICP-OES; Agilent Technologies) was used for quantitative determination of Pt ions in the obtained solutions. The density of Pt supported by each electrode catalyst, expressed in terms of "% by mass," meaning a percentage of the mass to the total mass of the electrode catalyst, was determined based on the volume of the solution obtained above and the quantitatively determined amount of Pt in the solution, and the amount of Pt supplied and the amount of carbon supplied.

### [II-2: Determination of the particle size of catalyst particles]

An XRD apparatus (RINT2500; RIGAKU) was used for determining XRD of catalyst particles contained in the electrode catalysts of the Examples and the Comparative Examples. The determination conditions are as follows: target: Cu; output: 40 kV, 40 mA. The obtained XRDs for the electrode catalysts of the Examples and the Comparative Examples were used for fitting of a normal distribution curve to the peak pattern around 2θ = 68° corresponding to a (220) plane of Pt. After such fitting, the half-value width of the normal distribution curve was calculated. Based on the obtained half-value width, the particle size of each catalyst metal containing Pt was calculated by a known method (JIS H7805).

### [II-3: Evaluation of MEAs containing electrode catalysts]

Each electrode catalyst (1 g) was suspended in water. Nafion (registered trademark) (274704; Du Pont) serving as an ionomer and ethanol were added to the suspension. The obtained suspension was stirred overnight and subjected to dispersion treatment using an ultrasound homogenizer. Thus, an ink solution was prepared. The mass ratio of the components in the ink solution was as follows: water : ethanol : ionomer : electrode catalyst = 10:2:1:1. The ink solution was applied to the surface of a Teflon sheet to prepare an anode. A cathode was joined to the anode by hot pressing to prepare an MEA. The cathode used herein was a support of DENKA BLACK (Denka Company Limited) supporting Pt as an electrode catalyst, and the ionomer used herein was Nafion (registered trademark) (274704; Du Pont). The amount of Pt coating for the anode was set to 0.1 mg/cm², and the amount of Pt coating for the cathode was set to 0.1 mg/cm². The cell temperature of the obtained MEA was set to 60°C. Hydrogen (H₂) moistened at a dew point of 55°C was introduced at a concentration of 1% into cathode and anode electrodes of the MEA. H₂ diffusion resistance was determined based on the limit current value on the anode side upon voltage sweep. Then, the H₂ concentration was increased to 100% for voltage sweep. The value of the anode overvoltage was calculated by subtracting the value of the overvoltage for H₂ generation on the cathode side and the value of the DC resistance overvoltage from the value of the overvoltage detected at a current value of 2.0 A/cm².

### <III: Evaluation results for electrode catalysts>

### [III-1: Conditions for preparation of electrode catalysts and physical property data]

Table 1 shows the summary of conditions for preparation of the electrode catalysts of the Examples and the Comparative Examples and the performance values for the electrode catalysts. In addition, Fig. 2 shows the relationship between the pore volume of pores having pore sizes of 10 nm or less on the carbon support for the electrode catalysts of the Examples and the Comparative Examples and H₂ diffusion resistance in MEAs having anodes for which the electrode catalysts were used. Fig. 3 shows the relationship between the pore volume of pores having pore sizes of 10 nm or less on the carbon support for the electrode catalysts of the Examples and the Comparative Examples and anode overvoltage in MEAs having anodes for which the electrode catalysts were used. In the figures, white diamonds represent the values for Comparative Examples 1 to 5, and black squares represent the values for Examples 1 to 12.

**Table 1**

| | Carbon support | Catalyst particles | | MEA | |
|---|---|---|---|---|---|
| Example/ Comparative Example | Pore volume (cm³/g) | Density of supported Pt (% by mass) | Pt particle size (nm) | H₂ diffusion resistance (s/m) | Anode overvoltage @ 2.0 A/ cm² (mV) |
| Comparative Example 1 | 10.1 | 20 | 2.0 | 63 | 12.5 |
| Comparative Example 2 | 14.8 | 20 | 2.0 | 84 | 23.8 |
| Comparative Example 3 | 2.5 | 20 | 4.2 | 62 | 12.2 |
| Comparative Example 4 | 2.5 | 10 | 2.0 | 38 | 13.0 |
| Comparative Example 5 | 2.5 | 50 | 3.1 | 62 | 12.1 |
| Example 1 | 8.4 | 20 | 2.0 | 48 | 8.2 |
| Example 2 | 6.9 | 20 | 2.0 | 36 | 3.0 |
| Example 3 | 2.5 | 20 | 1.5 | 28 | 7.7 |
| Example 4 | 2.5 | 20 | 2.0 | 35 | 8.3 |
| Example 5 | 2.5 | 20 | 2.5 | 42 | 9.5 |
| Example 6 | 2.5 | 20 | 3.1 | 49 | 10.5 |
| Example 7 | 2.5 | 15 | 2.0 | 32 | 10.3 |
| Example 8 | 2.5 | 30 | 2.0 | 41 | 9.4 |
| Example 9 | 2.5 | 40 | 2.1 | 46 | 10.1 |
| Example 10 | 3.5 | 20 | 2.0 | 28 | 0.8 |
| Example 11 | 2.2 | 20 | 2.0 | 32 | 3.8 |
| Example 12 | 1.1 | 20 | 2.0 | 41 | 2.7 |

As shown in Table 1, the pore volume of pores having pore sizes of 10 nm or less in a carbon support is large for the electrode catalysts of the Comparative Example 1 and 2. Therefore, catalyst particles having fine particle sizes, which are important for anode electrode catalyst activity, are highly likely to be supported inside a carbon support (Fig. 1). This probably causes the H₂ diffusion pathway to be extended and H₂ diffusion resistance to increase, resulting in increased anode overvoltage (Figs. 2 and 3). Meanwhile, the pore volume of pores having pore sizes of 10 nm or less in a carbon support is small for the electrode catalysts of Examples 1 to 12, and especially for Examples 3 to 12. Such carbon support has a solid structure with a small number of pores. Therefore, catalyst particles having fine particle sizes, which are important for anode electrode catalyst activity, are highly likely to be supported on the surface of a carbon support (Fig. 1). This probably causes the H₂ diffusion pathway to be shortened and H₂ diffusion resistance to decrease, resulting in decreased anode overvoltage (Figs. 2 and 3).

The present specification includes contents described in the specification and/or drawings of Japanese patent application No. 2015-252162 to which the present application claims priority.

All publications, patent and patent applications cited herein are incorporated herein by reference in their entirety.

## Claims

1. An anode electrode catalyst for fuel cells, comprises:
a carbon support having at least one pore having a pore size of 10 nm or less and a pore volume of 1.1 to 8.4 cm³/g; and
catalyst particles having particle sizes of 3.1 nm or less and supported by the carbon support so that the density of supported catalyst particles is 15% to 40% by mass.

2. The anode electrode catalyst for fuel cells according to claim 1, wherein the catalyst particles contain platinum.

3. The anode electrode catalyst for fuel cells according to claim 1, wherein the at least one pore has a pore volume of 2.2 to 8.4 cm³/g.

4. The anode electrode catalyst for fuel cells according to claim 1, wherein the catalyst particles have particle sizes of 1.5 to 3.1 nm.

5. The anode electrode catalyst for fuel cells according to claim 1, wherein the density of supported catalyst particles is 15% to 30% by mass.

6. A fuel cell, which comprises the anode electrode catalyst for fuel cells according to claim 1.
